# EUROPÄISCHE PATENTANMELDUNG

(11) **EP 0 954 963 A2**
(43) Veröffentlichungstag der Anmeldung: **10.11.1999**
(21) Anmeldenummer: 99850071.4
(22) Anmeldetag: 30.04.1999
(51) Int. Cl.: A01J 5/08

(54) **Vorrichtung für die Montage von Zitzenbechern**

(30) Priorität: 30.04.1998 DE 29807834 U
(71) Anmelder: Spalatus Engineering Systems AB, 213 77 Malmö (SE)
(72) Erfinder: Ridell, Arne, 232 54 Akarp (SE); Ivacic, Josef, 215 71 Malmö (SE)
(74) Vertreter: Rostovanyi, Peter

(57) **Zusammenfassung**

Vorrichtung für die Montage eines zum Melken vorgesehenen Zitzenbechers, der eine Aussenhülse (1), ein Zitzengummi (2) mit einem am Auslassende (4) angebrachten Kragen (5), welcher zwischen sich und dem Körperteil (13) des Zitzengummis (2) einen Ringraum (9) für abdichtetes Festhalten des entsprechenden Endes (6) der Aussenhülse (1) bildet, und einer Nippel (3) für den Anschluss des Zitzenbechers an einen Milchschlauch aufweist. Die Vorrichtung umfasst eine Schubstange (14) für das Heranführen des Nippels (3) an das Auslassende (7) des Zitzengummis (2) vom Einlassende des Zitzengummis (2) aus. Ein ringförmiger Dorn (16) mit kegelförmig angebrachten, dünnen, federnden Zungen (19) ist vorgesehen, der gleitverschiebbar auf der Aussenhülse (1) aufsetzbar ist und dessen Zungen (19) an ihrem freien, schmalen Ende einen Durchmesser bilden, der Einführen des Vorderteils der Dornzungen (19) in den Ringraum ermöglicht.

## Beschreibung

Die Neuerung bezieht sich auf eine Vorrichtung für die Montage eines Zitzenbechers.

Ein Zitzenbecher besteht wie bekannt aus einer äussere Hülse, die aus Metall oder Kunststoff sein kann, und aus einer inneren Gummihülse, dem so genannten Zitzengummi. Bei dieser Art von Zitzenbecher hat das Zitzenmontageende des Zitzengummis einen umgebördelten Kragen für abgedichteten Eingriff mit dem entsprechenden Ende der Aussenhülse und steht das andere Ende des Zitzengummis vom anderen Ende der Aussenhülse vor unter abgedichteten Festhalten eines Nippels, meistens aus Kunststoff, an den ein Milchschlauch angescßlossen wurd.

Das Zitzengummi altert und verliert seine Abdichtungsfähigkeit und Elastizität, warum es mit regelmässigen Abständen ausgetauscht werden muss unter Beibehaltung der Aussenhülse und des Nippels.

Die Montage eines neuen Zitzengummis zusammen mit der Aussenhülse und dem Nippel ist eine schwierige Prozedur, die gewöhnlich mit der Hand ausgeführt wird. Die Schwierigkeiten sind vor allem darin zu suchen, dass es schwer ist den Zitzengummikragen über die Aussenhülse zu stülpen. Der Nippel wird im allgemeinen mittels einer Schubstange vom Kragenende des Zitzengummis zum anderen Ende des Zitzengummis geführt.

Zweck der Neuerung ist es eine Vorrichtung zu schaffen, mit der sich die Montage leicht und bequem ausführen lässt.

Der Zweck der Neuerung wird mit einer Vorrichtung gemäss Schutzanspruch 1 erreicht. Vorteilhafte Ausführungen werden in den untergeordneten Ansprüchen angegeben.

Ein Ausführungsbeispiel der Neuerung wird im folgenden näher beschrieben unter Hinweis auf die angelegten Zeichnungen, auf denen:

Fig. 1 die Teile eines Zitzenbechers zeigt.

Fig. 2 Einzelheiten einer erfindungsgemässen Vorrichtung sowie Zitzenbecherteile zeigt.

Fig. 3 Zitzenbecherteile an vorgesehener Stelle in der Vorrichtung während der Montage zeigt.

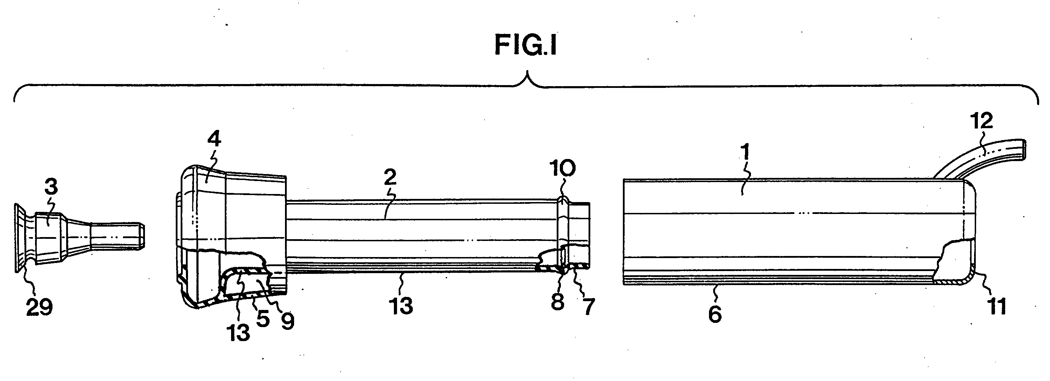

Zunächtst wurd auf Fig. 1 hingewiesen. Der Zitzenbecher der mit Hilfe der Vorrichtung gemäss der Erfindung montiert werden soll, umfasst eine zylinderförmige Aussenhülse 1, ein zylinderförmiges Zitzengummi 2 und einen Nippel 3. Das Zitzenmontageende oder Einlassende 4 des Zitzengummis 2 hat einen umgebördelten Kragen 5 für abgedichteten Eingriff mit dem entsprechenden Ende 6 der Aussenhülse 1, welches im folgenden Einlassende genannt wird, und das andere Ende oder Auslassende 7 des Zitzengummis 2 hat eine Innennut 8 für abgedichteten Eingriff mit einem Flansch 29 am Nippel 3. Das Zitzengummiauslassende 7 hat auch einen Aussenwulst 10 für dichte Anlage gegen das andere Ende 11 der Aussenhülse 1, welches im folgenden Auslassende genannt wird, mit geringerem Innendurchmesser, wenn das Zitzengummi 2 mit dem Nippel 3 in der Aussenhülse 1 montiert ist. Auf der Aussenhülse 1 gibt es auch auf konventionelle Art einen Stutzen 12 für den Anschluss eines nicht gezeigten Pulsatorschlauches.

Ein solcher Zitzenbecher ist an und für sich zuvor bekannt.

Da der Eingriff zwischen dem kragenversehenen Einlassende 4 des Zitzengummis 2 und dem Einlassende 6 der Aussenhülse 1 dicht sein soll, ist der Innendurchmesser des Kragens 5 kleiner, in unbelastetem Zustand, d.h. bevor die Aussenhülse 1 in den Ringraum 9 zwischen dem Kragen 5 und dem Körperteil 13 des Zitzengummis 2 eingeführt worden ist, als der Aussendurchmesser der Aussenhülse 1, so dass es schwierig ist den Kragen 5 auf das Einlassende 6 der Aussenhülse 1 zu stülpen, wenn dass Zitzengummi 2 auf der Aussenhülse 1 montiert werden soll. Da ausserdem der Eingriff zwischen der Innennut 8 und dem Flansch 29 des Nippels 3 dicht sein soll, ist es schwer den Nippel 3 im Auslassende 7 des Zitzengummis 2 vom Einlassende 7 des Zitzengummis 2 aus zu montieren, unter Beachtung, dass die Wandung des Auslassendes 7 vom Zitzengummi 2 zwischen dem Nippel 3 und dem Auslassende der Hülse zum Abdichten zusammengepresst werden muss.

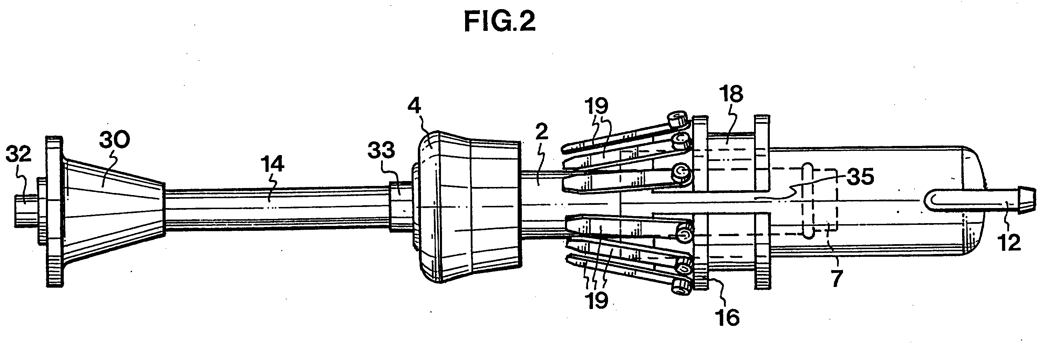

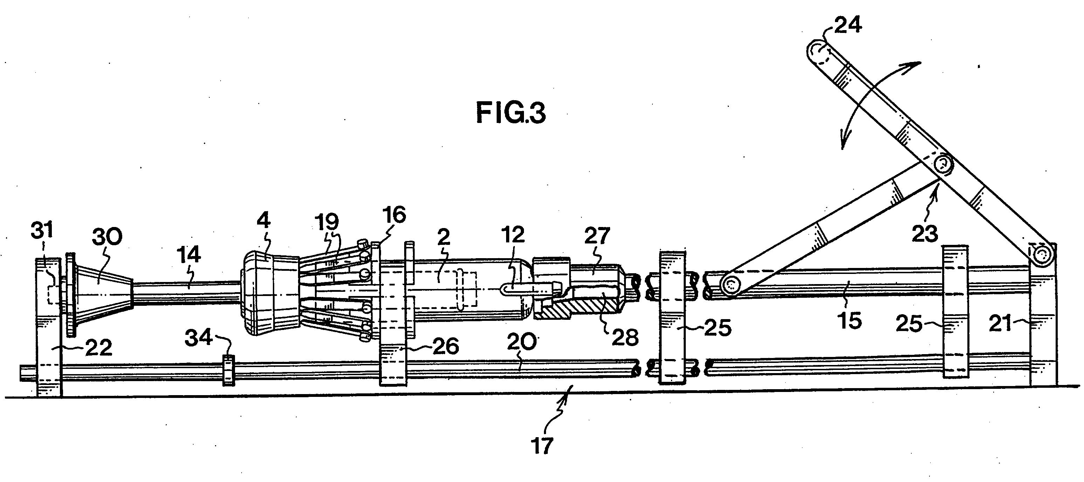

Die als Beispiel gegebene, erfindungsgemässe Vorrichtung, die diese Schwierigkeiten überwinden soll, umfasst gemäss Fig. 2 und 3:
- eine Schubstange 14 zum Schieben des Nippels 3 vom Einlassende 4 des Zitzengummis 2 zum Auslassende 7 des Zitzengummis 2, so dass der Flansch 29 des Nippels 3 in die Nut 8 eingreifend einrastet,
- eine Druckstange 15 zum Einführen des Einlassendes 6 der Aussenhülse 1 in den Ringraum 9,
- einen Dorn 16, der vorgesehen ist während dem Einführen den Kragen 5 auszuweiten um das genannte Einführen zu ermöglichen,
- ein Stativ 17 zur Montage der Stange 14, des Dornes 16, der Druckstange 15 sowie der genannten Bauteile des Zitzenbechers: Aussenhülse 1, Zitzengummi 2 und Nippel 3, derart, dass bei Ausüben einer Druckkraft gegen die Druckstange 15 in deren Längsrichtung der Nippel 3 an seinen Platz gedrückt wird und das Einlassende 6 der Aussenhülse 1 in den Ringraum 9 eindringt.

Der Dorn 16 besteht aus einem Ring 18 mit daran befestigten, vom Ring aus kegelförmig gleichmässig verteilten, dünnen federnde Zungen 19. In unbelastetem Zustand bilden die schmalen Enden dieser Zungen einen Kreis mit etwas geringerem Durchmesser als der Innendurchmesser des Kragens 5. Das Vorderteil der Zungen kann also mit Gleitsitz in den Ringraum 9 eingeführt werden, wenn der Kragen 5 unbelastet ist.

Der Dorn 16 ist aussen auf der Aussenhülse 1 gleitverschiebbar, d.h. der Durchmesser vom Vorderende des Dornkegels ist etwas grösser als der Aussendurchmesser der Aussenhülse 1.

Das Stativ 17 hat einen Rahmen 20 und von diesem aufragende Endplatten 21, 22. Die eine, 21, dient als Lager für die Druckstange 15 und hat einen dafür vorgesehenen manuell oder mittels Motor betätigbaren Antriebsmechanismus, der bei dieser Ausführung aus einem Hebelmechanismus 23 mit Betätigungsgriff 24 besteht, der aber auch irgendein anderer geeigneter Mechanismus sein kann zum verursachen der Translationsbewegung der Druckstange 15 im Stativ 17, das im übrigen Steuerungen 25 für die Druckstange 15 hat.

Das Stativ 17 hat ausserdem einen auf dem Rahmen 20 gleitverschiebbar gelagerten Schlitten 26 für den Dorn 16, wobei der Dorn auf den Schlitten legbar ist und der Schlitten den Dorn gegen Bewegung gegenüber dem Schlitten in Längsrichtung des Rahmens festhält.

Die Druckstange 15 hat einen vorderen Kopf 27, der ausgeformt ist für den Eingriff mit dem Aussenende 11 der Aussenhülse 1 und für die Aufname des Nippels 3, siehe Ausnehmung 28. Die andere Endplatte 22 des Stativs 17 ist ausgeformt für den Eingriff mit dem einen Ende oder der Basis 30 der Nippelschubstange 14, siehe Bohrung 31 und Zapfen 32, wobei das andere Ende oder der Kopf 33 der Stange ausgeformt ist für den Inneneingriff in den Nippel 3. Die Basis 30 ist kegelförmig für Inneneingriff im Einlassende 4 des Zitzengummis 2 mit Reibeingriff im stärkeren Teil der Kegelform.

Die Funktion der Vorrichtung ist folgende, zihe Fig. 2 und 3.

Auf dem Dorn 16 wird die Aussenhülse 1 angebracht, in welche das Zitzengummi 2 mit dem Nippel 3 geeigneterweise schon im Einlassende 4 eingeführt worden ist, so dass die Zungen 19 des Dorns 16 in Richtung der Aussenhülse 1 und der Einlassenden 4, 6 des Zitzengummis 2 zeigen und die Vorderenden dieser Zungen sich im Ringraum 9 befinden. Das Aggregat bestehend aus Aussenhülse 1, Zitzengummi 2, Nippel 3 und Dorn 16 wird auf dem Schlitten 26 plaziert. Die Nippelschubstange 14 wird so montiert, dass deren Kopf 33 mit dem Nippel 3 und die Basis 30, 32 mit der Stativendplatte 22 zum Eingriff kommt. Der Antriebsmechanismus 23 wird beaufschlagt und der Kopf 27 der Druckstange 15 wird zum Eingriff gebracht mit dem Auslassende 11 der Aussenhülse 1. Die Druckstange 15 wird weiter in ihre Längsrichtung getrieben, wobei der Nippel im Zitzengummi 2 gegen dessen Auslassende 7 getrieben wird. Weiterer Antrieb führt dazu, dass die Aussenhülse 1 gegenüber der Stange 14 verschoben wird, wenn das Einlassende 4 des Zitzengummis 2 beginnt entlang der kegelförmigen Basis 30 der Stange aufwärts zu klettern, auf Grund der Reibung zwischen der Basis 30 und dem Einlassende 4 des Zitzengummis 2. Die Relativbewegung lässt die Federzungen 19 sich spreizen am Vorderende des Dorns 16, was zur Ausweitung des Kragens 5 des Zitzengummis 2 führt. Schliesslich liegt das Einlassende 6 der Aussenhülse 1 auf dem Boden des Ringraumes 9 auf, so dass noch weiter geführter Antrieb den Nippel 3, unter Einwirkung der Schubstange 14, dazu bewegt seine oben beschriebene Endlage einzunehmen, in der der Flansch 29 des Nippels 3 in der Zitzengumminut 8 eingerastet ist, das Einlassende des Zitzengummis durch das Auslassende 11 der Aussenhülse 1 gedrungen ist, der Zitzengummiswulst 10 abgedichtet gegen das Auslassende 11 drückt und das Einlassende 4 des Zitzengummis 2 entlang der ganzen kegelförmigen Basis 30 der Schubstange 14 hinaufgedrückt worden ist.

Weiterer Antrieb der Druckstange 15 mittels des Antriebsmechanismus 23 wird von einem am Stativ angebrachten Anschlag 34 verhindert, der den Schlitten 26 mit dem Dorn 16 zwingt sich gegen das Stativende 21 zurückzuziehen, so dass die Zungen 19 des Dorns 16 aus dem Ringraum 9 herausgezogen werden.

Die Druckstange 15 kann jetzt zurückgezogen werden mittels des Antriebsmechanismus 23 und der fertigmontierte Zitzenbecher kann vom Stativ entfernt werden und vom Dorn 16 und der Stange 14 befreit werden.

Die Vorrichtung gemäss der Erfindung erleichtert auch die Demontage des Zitzenbechers, wenn auch die Demontage, aus leicht verständlichen Gründen, nicht gleich grosse Schwierigkeiten wie die Montage beinhaltet. Für die Demontage wird, mittels des Antriebsmechanismus 23, der Zitzenbecher (ohne Dorn 16 und Stange 14) zwischen dem Kopf 27 der Druckstange 15 und der Endplatte 22 eingespannt und wird die Druckstange in Richtung der Endplatte 22 getrieben um den Nippel 3 in das Zitzengummi 2 zu drücken, wonach das Zitzengummi 2, der Nippel 3 und die Aussenhülse 1 leicht mit der Hand entfernt werden können nach Entfernung des Zitzenbechers vom Stativ.

Um den Stutzen 12 der Aussenhülse 1 aufzunehemen gibt es eine Stutzenaufnahmenut im Druckstangenkopf 27 (nicht gezeigt) und im Dorn 16, Bezugszeichen 35.

Es gibt auf dem Markt verschiedene Arten von Zitzengumminippeln, weswegen der Kopf 33 der Stange vorzugsweise entfernbar an der Stange 14 befestigt, z.B. verschraubt, ist, so dass verschiedene Köpfe für den Eingriff mit verschiedenen Nippeln angebracht werden können.

Zweckmässigerweise wird der Ringraum 9 und das Auslassende des Zitzengummis 2 für ungehindertes Einführen der Aussenhülse 1 und des Nippels 3 innen geschmiert. Das Schmiermitel kann eine Seifenlauge sein.

Selbstverständlich können der Dorn 16 und der Schlitten 26 einstückig ausgeführt sein.

## Patentansprüche

1. Vorrichtung für die Montage eines zum Melken vorgesehenen Zitzenbechers, der eine Aussenhülse (1), ein Zitzengummi (2) mit einem am Auslassende (4) angebrachten Kragen (5), welcher zwischen sich und dem Körperteil (13) des Zitzengummis (2) einen Ringraum (9) für abdichtetes Festhalten des entsprechenden Endes (6) der Aussenhülse (1) bildet, und einer Nippel (3) für den Anschluss des Zitzenbechers an einen Milchschlauch aufweist, welche Vorrichtung eine Schubstange (14) für das Heranführen des Nippels (3) an das Auslassende (7) des Zitzengummis (2) vom Einlassende des Zitzengummis (2) aus umfasst, **dadurch gekennzeichnet,** dass ein ringförmiger Dorn (16) mit kegelförmig angebrachten, dünnen, federnden Zungen (19) vorgesehen ist, der gleitverschiebbar auf der Aussenhülse (1) aufsetzbar ist und dessen Zungen (19) an ihrem freien, schmalen Ende einen Durchmesser bilden, der Einführen des Vorderteils der Dornzungen (19) in den Ringraum ermöglicht.

2. Vorrichtung gemäss Anspruch 1, **dadurch gekennzeichnet,** dass ein Stativ (17) und eine Druchstange (15), die auf dem Stativ in ihrer Längsrichtung translationsverschiebbar ist, sowie ein auf dem Stativ in der Längsrichtung der Druchstange gleitverschiebbar angebrachter Schlitten (26) für den Dorn (16) vorgesehen sind, wobei das Stativ auch ein Widerlager (14, 22, 30, 32) gegenüber der Druckstange (15) aufweist.

3. Vorrichtung gemäss Anspruch 1 oder 2, **dadurch gekennzeichnet,** dass das Widerlager (14, 22, 30, 32) die genannte Schubstange (14) umfasst.

4. Vorrichtung gemäss Anspruch 1 bis 3, **dadurch gekennzeichnet,** dass die Schubstange (14) ein kegelförmiges Ende för den Reibeingriff mit dem Einlassende (4) des Zitzengummis (2) hat.

5. Vorrichtung gemäss Anspruch 1 bis 3, **dadurch gekennzeichnet,** dass für die Translationsverschiebung der Druckstange (15) ein Hebelmechanismus (23) auf dem Stativ (17) angebracht ist.
